# EUROPÄISCHE PATENTSCHRIFT

(11) **EP 2 596 581 B1**
(45) Veröffentlichungstag und Bekanntmachung des Hinweises auf die Patenterteilung: **26.04.2017**
(21) Anmeldenummer: 11743800.2
(22) Anmeldetag: 13.07.2011
(51) Int. Cl.: H02P 9/48, H01L 29/872, G01R 31/36, H02P 9/30

(54) **ENERGIEVERSORGUNGSEINHEIT FÜR EIN BORDNETZ EINES KRAFTFAHRZEUGS**
POWER SUPPLY UNIT FOR AN ON-BOARD POWER SUPPLY OF A MOTOR VEHICLE
UNITÉ D'ALIMENTATION EN ÉNERGIE POUR UN RÉSEAU DE BORD D'UNE AUTOMOBILE

(30) Priorität: 22.07.2010 DE 102010031640
(43) Veröffentlichungstag der Anmeldung: 29.05.2013
(73) Patentinhaber: Robert Bosch GmbH, 70442 Stuttgart (DE)
(72) Erfinder: WOLF, Gert, 71563 Affalterbach (DE); EINBOCK, Stefan, 71665 Vaihingen/Enz (DE); JAROS, Rolf, 71522 Backnang (DE); SUELZLE, Helmut, 71691 Freiberg (DE)
(86) Internationale Anmeldenummer: PCT/EP2011/061989
(87) Internationale Veröffentlichungsnummer: WO 2012/010484

(56) Entgegenhaltungen:
- EP-A2- 0 408 055
- DE-A1-102004 056 663
- US-A- 5 397 991
- US-A1- 2008 030 184

## Beschreibung

Die vorliegende Erfindung betrifft eine Energieversorgungseinheit für ein Bordnetz eines Kraftfahrzeugs nach dem Oberbegriff des Patentanspruchs 1.

### Stand der Technik

Kraftfahrzeug-Generatoren, sogenannte Lichtmaschinen, umfassen üblicherweise eine Dioden-Brückenschaltung, mittels derer die vom Generator erzeugte Wechselspannung gleichgerichtet wird.

Diodengleichrichter sind relativ robust und zuverlässig und somit für den Betrieb im Kraftfahrzeug besonders geeignet. Sie weisen jedoch auch bestimmte Nachteile auf. Insbesondere zeigen Dioden einen nicht zu vernachlässigenden Spannungsabfall in Durchlassrichtung. Für die Gleichrichter in Kraftfahrzeugen werden Zenerdioden, insbesondere ZR-Dioden, eingesetzt, welche üblicherweise eine Durchlassspannung von ca. 0,7 V haben. Dies führt zusammen mit den zeitweise großen Strömen von über 200 A zu einem Leistungsabfall an der Diode von bis zu 50 W (bei dreiphasigen Generatoren). In der Folge müssen die Dioden für diese Leistungen ausgelegt und insbesondere auch ausreichend gekühlt werden.

Zwar sind Dioden mit niedrigerer Durchlassspannung bekannt, beispielsweise Germaniumdioden oder Schottky-Dioden, jedoch können diese im Fahrzeugbereich nicht ohne weiteres eingesetzt werden, da insbesondere deren ausgeprägte Temperaturabhängigkeit den Einsatz in bekannten Energieversorgungseinheiten für Kraftfahrzeuge aus nachfolgenden Gründen unmöglich macht:
Beim Start bestromt der Feld- bzw. Laderegler gespeist von der Starterbatterie die Erregerwicklung des Generators mit einem sog. Vorerregerstrom. Sobald sich der Läufer des Generators dreht, kann der Feldregler ein Spannungssignal an einer Phase (im Folgenden Phasensignal) erfassen und aus dessen Frequenz die Generatordrehzahl ableiten. Beim Erreichen einer vorgegebenen Einschaltdrehzahl wird dann der volle Erregerstrom eingeschaltet.

Bei herkömmlichen Energieversorgungseinheiten für das Bordnetz eines Kraftfahrzeugs muss jedoch der Wechselstromanteil des Phasensignals eine gewisse Mindestspannung aufweisen. Außerdem darf der Gleichstromanteil des Phasensignals eine bestimmte Schwelle nicht überschreiten. So können die minimal notwendige Phasenwechselspannung z.B. 3 V, gemessen von Spitze zu Spitze, und der maximal zulässige Gleichstromanteil z.B. 8 V betragen.

Während des Vorerregertaktens, wenn der Generator noch keinen Strom in das Bordnetz liefert, werden Gleichstrom- und Wechselspannungswert der Phasenspannung von den Sperrströmen der Gleichrichterdioden beeinflusst. Werden nun die zuvor beschriebenen Dioden, welche eine ausgeprägte Temperaturabhängigkeit zeigen, eingesetzt, fallen im erwärmten Zustand, bspw. in einer Zeit nach dem Abstellen der Brennkraftmaschine, üblicherweise an allen Dioden unterschiedliche Spannungen ab. Im Extremfall kann daher der Gleichstromanteil der Phasenspannung Werte außerhalb eines zulässigen Bereichs einnehmen, so dass der Feldregler bspw. bei einem Starvorgang im erwärmten Zustand die Startdrehzahl nicht oder zu spät erkennt und den Generator nicht oder zu spät einschaltet.

Es ist daher wünschenswert, eine Energieversorgungseinheit für ein Bordnetz eines Kraftfahrzeugs anzugeben, die für den Einsatz von temperaturabhängigen Gleichrichterelementen geeignet ist.

Aus der US 5 279 991 ist ein Batterieladesystem für ein Kraftfahrzeug bekannt.

Aus der EP 0 408 055 A2 ist eine Vorrichtung zum Steuern eines Generators bekannt.

Aus der US 2008/0030184 A1 ist ein System zum Glätten der Ausgangsspannung eines Generators bekannt.

### Offenbarung der Erfindung

Erfindungsgemäß wird eine Energieversorgungseinheit mit den Merkmalen des unabhängigen Patentanspruchs 1 vorgeschlagen. Vorteilhafte Ausgestaltungen sind Gegenstand der Unteransprüche sowie der nachfolgenden Beschreibung.

### Vorteile der Erfindung

Die Erfindung basiert auf der Maßnahme, den Phasensignal-Erfassungsbereich des Ladereglers so zu vergrößern, dass im Wesentlichen alle möglichen auftretenden Spannungen erfasst werden können. Damit kann der besondere Vorteil erzielt werden, auch temperaturabhängige Dioden einsetzen zu können und somit deren Vorteile zu realisieren. Es existieren nämlich Dioden mit bspw. einer vorteilhafterweise geringen Flussspannung kleiner als 0,5 V, vorzugsweise kleiner als 0,3 V oder 0,4 V, so dass während des Betriebs eine im Vergleich zu herkömmlichen ZR-Dioden geringere Verlustleistung abfällt. Bei Einsatz derartiger Dioden wird der Wirkungsgrad des Generators erhöht und die abzuführende Wärmemenge vermindert. Die notwendigen Kühlungsmaßnahmen für die Dioden können reduziert werden. Geeignete Gleichrichterelemente sind insbesondere Schottky-Dioden, TMBS-Dioden, TJBS-Dioden und/oder Lambda-Dioden in entsprechender Ausgestaltung. Weiterhin zeigen solche Dioden im kalten Zustand, d.h. bspw. unter 50° C, einen sehr geringen Leckstrom, was beim Kraftfahrzeug insbesondere der Entladung der Starterbatterie entgegenwirkt.

Es wurde erkannt, dass der Einsatz von verbesserten Dioden, wie sie bspw. in der DE 10 2006 024 850 A1 beschrieben werden, in Energieversorgungseinheiten für Kraftfahrzeuge besonders einfach möglich ist, wenn der Feldregler bzw. Laderegler entsprechend ausgebildet wird. Herkömmliche Feldregler sind nur in der Lage, ein Phasensignal innerhalb eines Spannungsbereichs um die halbe Bordnetzspannung, z.B. von ca. 3 V bis ca. 9 V bei einem 12 V-Bordnetz, abzutasten bzw. zu erfassen. Auf Grund der besonderen, oben erläuterten Temperaturabhängigkeit von bevorzugten Gleichrichterelementen, können jedoch an den Gleichrichterzweigen Spannungen im Bereich von nahezu 0 V bis nahezu der Bordspannung abfallen. Der Einsatz bevorzugter Dioden mit geringer Durchlassspannung wird daher möglich, wenn der Feldregler ebendiesen Spannungsbereich im Wesentlichen vollständig erfassen kann bzw. einen Spannungserfassungsbereich für die Auswertung des Phasensignals mit einem Minimalwert und einem Maximalwert hat, wobei zumindest der Maximalwert an die Nennspannung einer Energieversorgungseinheit des Kraftfahrzeugs angepasst ist. Der Minimalwert kann ebenso angepasst sein oder 0 V betragen. Die Anpassung kann in einem vorgebbaren Prozentwert (0-100%) der Nennspannung erfolgen, wobei der Fachmann einen geeigneten Prozentwert in der Praxis auswählen wird.

Die grundsätzliche Technik der im Stand der Technik eingesetzten Laderegler, insbesondere die Unfähigkeit, bestimmte Spannungen zu erfassen, ist seit langem im Wesentlichen unverändert und wird in Fachkreisen nicht hinterfragt. Der Einsatz besonderer Gleichrichterelemente wird daher im Stand der Technik immer durch eine entsprechende Ausgestaltung des Gleichrichters selbst, sei es durch besondere Kühlmaßnahmen oder besondere Verschaltungen, wie bspw. in der nicht vorveröffentlichten DE 10 2009 028 246, möglich gemacht. Die Erfinder haben jedoch erkannt, dass eine einfachere Möglichkeit zum Einsatz besonderer Gleichrichterelemente in der erfindungsgemäßen Ausgestaltung des Ladereglers liegt.

Die Erfindung ist besonders vorteilhaft in Kraft-, Luft- oder Wasserfahrzeugen einsetzbar. Als Generator werden zweckmäßigerweise Klauengeneratoren eingesetzt. auch der Einsatz für rekuperierende System, beispielsweise in riemengetriebenen Startergeneratoren.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Kurze Beschreibung der Zeichnungen

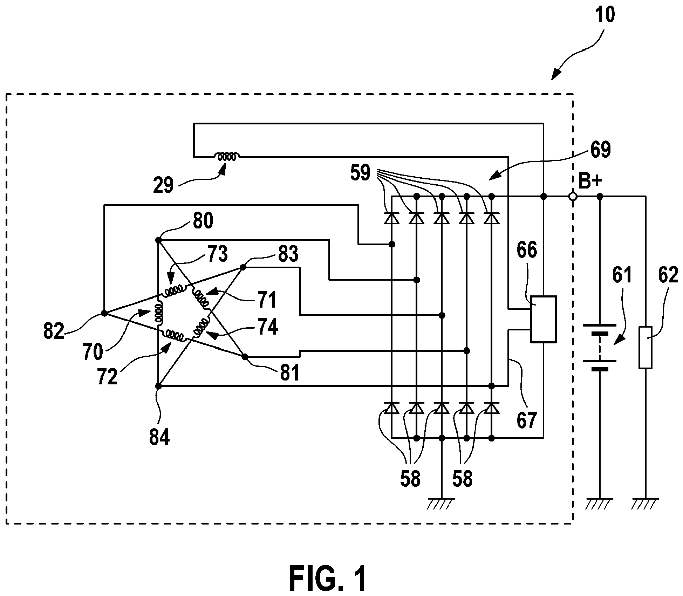

Figur 1 zeigt ein Schaltbild einer bevorzugten Ausführungsform einer erfindungsgemäßen Energieversorgungseinheit.

### Ausführungsform(en) der Erfindung

In Figur 1 ist eine bevorzugte Ausführungsform einer erfindungsgemäßen Energieversorgungseinheit schaltplanartig dargestellt. Die Energieversorgungseinheit umfasst einen Wechselstromgenerator 10 mit fünf phasenbildenden Wicklungssträngen 70, 71, 72, 73, 74. Es versteht sich, dass auch andere Phasenzahlen und Verschaltungen möglich sind, insbesondere dreiphasige (oder allgemein mehrphasige) Anordnungen in Stern- oder Dreiecksschaltung. Die Gesamtheit aller Wicklungsstränge 70, 71, 72, 73, 74 bildet die Ständerwicklung. Die fünf phasenbildenden Wicklungsstränge 70, 71, 72, 73, 74 sind hier zu einer Grundschaltung als fünfzackiger Stern (Drudenfuß) verschaltet, wobei die jeweils in den Zacken des Sterns verschalteten Stränge einen Winkel von ca. 36° el. einschließen. An den Verschaltungspunkten der Zacken 80, 81, 82, 83, 84 ist eine Gleichrichterbrückenschaltung 69 angeschlossen. Die Wicklungsstränge sind wie folgt verschaltet:
Der Wicklungsteilstrang 70 ist am Verschaltungspunkt 80 mit dem Wicklungsteilstrang 71 verbunden. Der Wicklungsstrang 71 ist an seinem gegenüberliegenden Ende am Verschaltungspunkt 81 mit dem Wicklungsstrang 72 verbunden. Der Wicklungsstrang 72 ist an seinem gegenüberliegenden Ende am Verschaltungspunkt 82 mit dem Wicklungsstrang 73 verbunden. Der Wicklungsteilstrang 73 ist an seinem gegenüberliegenden Ende am Verschaltungspunkt 83 mit dem Wicklungsstrang 74 verbunden. Der Wicklungsstrang 74 ist an seinem gegenüberliegenden Ende am Verschaltungspunkt 84 mit dem Wicklungsstrang 70 verbunden.

Die Verschaltungspunkte 80, 81, 82, 83, 84 der Wicklungsstränge 70, 71, 72, 73, 74 sind mit dem separaten Brückengleichrichter 69 verbunden, der aus fünf Minusdioden 58 und fünf Plusdioden 59 aufgebaut ist. Gleichspannungsseitig ist ein Spannungsregler (sog. Feld- bzw. Laderegler) 66 parallel geschaltet, der durch Beeinflussung des Stromes durch die Erregerwicklung 29 die Spannung des Generators regelt. Der Spannungsregler 66 ist mit dem Gleichrichter verbunden, die Ausgangsspannung zu detektieren und den Erregerstrom entsprechend einzustellen. Weiterhin ist der Spannungsregler 66 über eine Verbindung 67 mit zumindest einer Phase (hier 84) des Wechselstromgenerators 10 verbunden, um ein Phasensignal zu erfassen. Auf Grundlage des erfassten Phasensignals bestimmt der Spannungsregler 66 die Drehzahl des Wechselstromgenerators 10.

Das Bordnetz ist schematisch durch eine Fahrzeugbatterie 61 und durch Fahrzeugverbraucher 62 dargestellt.

Bei den Dioden 58 und 59 handelt es sich beispielsweise um Dioden, wie sie in der DE 10 2006 024 850 A1 beschrieben werden. Der Einsatz dieser Dioden führt zu einer Reihe von Vorteilen, wie einer verringerten Verlustleistung, verringerten Ruheströmen usw. Wie erläutert, zeigen diese Dioden jedoch auch eine ausgeprägte Temperaturabhängigkeit, mit der herkömmliche Spannungsregler nicht umgehen können. Wenn der Generator abgestellt wird, entweder weil er stillsteht oder weil der Erregerstrom durch die Erregerspule abgeschaltet wird, fallen an den Dioden 58 und 59 stark unterschiedliche Spannungen ab, so dass herkömmliche Spannungsregler anhand des Phasensignals die Drehzahl, d.h. hier den Stillstand des Generators, nicht erkennen können. Auch extreme Spannungen, die beispielsweise beim Start des Kraftfahrzeugs kurz nach dem Abstellen auftreten können, können nicht erfasst werden. Beim Anfahren wird nämlich dem Phasensignal die an den Dioden abfallende Batteriespannung überlagert, welche - wie eingangs erläutert - deutlich aus der Mitte verschoben sein kann.

Gemäß der hier dargestellten Ausführungsform der Erfindung ist der Spannungsregler 66 mit einem Spannungserfassungsbereich für das Phasensignal ausgebildet, der an die Nennspannung der Fahrzeugbatterie 61 angepasst ist. Der Spannungsregler 66 weist dafür insbesondere einen Analog/Digital-Wandler zur Auswertung des Phasensignals auf, um zumindest den Spannungsbereich von 0 V bis 12 V (Nennspannung) abzudecken. In der Folge kann das Phasensignal auch erkannt werden, wenn es durch einen stark verschobenen Gleichspannungsanteil von bspw. nahezu der Bordspannung. überlagert wird.

## Patentansprüche

1. Energieversorgungseinheit für ein Bordnetz eines Kraftfahrzeugs, die einen ein Phasensignal bereitstellenden Wechselstromgenerator (10) mit einer Erregerspule (29), einen der Erregerspule (29) zugeordneten Feldregler (66) und einen Gleichrichter (69) mit Gleichrichterelementen (58) zur Gleichrichtung der von dem Wechselstromgenerator gelieferten Generator-Spannung aufweist, **dadurch gekennzeichnet, dass** der Feldregler (66) einen Spannungserfassungsbereich für die Auswertung des Phasensignals mit einem Minimalwert und einem Maximalwert hat, wobei der Maximalwert an die Nennspannung einer Energieversorgungseinheit (10, 61) des Kraftfahrzeugs derart angepasst ist, dass die Energieversorgungseinheit (10, 61) für den Einsatz von temperaturabhängigen Gleichrichterelementen (58) eingerichtet ist, damit das Phasensignal auch erkannt werden kann, wenn es durch einen stark verschobenen Gleichspannungsanteil überlagert wird.

2. Energieversorgungseinheit nach Anspruch 1, wobei der Maximalwert an die Nennspannung des Wechselstromgenerators (10) oder einer zum Starten des Kraftfahrzeugs vorgesehenen Starterbatterie (61) angepasst ist.

3. Energieversorgungseinheit nach Anspruch 1 oder 2, wobei der Maximalwert im Wesentlichen der Nennspannung der Energieversorgungseinheit (10, 61) des Kraftfahrzeugs entspricht.

4. Energieversorgungseinheit nach Anspruch 1 oder 2, wobei der Maximalwert zumindest einem Wert entspricht, der in einem Bereich von 85% bis 100% der Nennspannung liegt.

5. Energieversorgungseinheit nach einem der vorstehenden Ansprüche, wobei der Minimalwert höchstens einem Wert entspricht, der in einem Bereich von 0% bis 15% der Nennspannung liegt.

6. Energieversorgungseinheit nach einem der vorstehenden Ansprüche, wobei der Feldregler (66) einen Analog/Digital-Wandler aufweist, der einen Spannungserfassungsbereich für die Auswertung des Phasensignals mit dem Minimalwert und dem Maximalwert hat.

7. Energieversorgungseinheit nach einem der vorstehenden Ansprüche, wobei die Gleichrichterelemente (58) als Trench-Elemente ausgebildet sind.

8. Energieversorgungseinheit nach einem der vorstehenden Ansprüche, wobei die Gleichrichterelemente (58) wenigstens eine Schottky-Diode, TMBS-Diode, TJBS-Diode und/oder eine Lamda-Diode umfassen.

## Claims

1. Power supply unit for an on-board power supply of a motor vehicle, which power supply unit has an AC generator (10) which makes available a phase signal and has an exciter coil (29), a field regulator (66) which is assigned to the exciter coil (29), and a rectifier (69) with rectifier elements (58) for rectifying the generator voltage which is supplied by the AC generator, **characterized in that** the field regulator (66) has a voltage-detection region for evaluating the phase signal with a minimum value and a maximum value, wherein the maximum value is adapted to the rated voltage of a power supply unit (10, 61) of the motor vehicle in such a way that the power supply unit (10, 61) is configured for the use of temperature-dependent rectifier elements (58) so that the phase signal can be detected even if a highly shifted DC voltage component is superimposed on it.

2. Power supply unit according to Claim 1, wherein the maximum value is adapted to the rated voltage of the AC generator (10) or of a starter battery (61) provided for starting the motor vehicle.

3. Power supply unit according to Claim 1 or 2, wherein the maximum value corresponds essentially to the rated voltage of the power supply unit (10, 61) of the motor vehicle.

4. Power supply unit according to Claim 1 or 2, wherein the maximum value corresponds at least to a value which is in a range from 85% to 100% of the rated voltage.

5. Power supply unit according to one of the preceding claims, wherein the minimum value corresponds at maximum to a value which is in a range from 0% to 15% of the rated voltage.

6. Power supply unit according to one of the preceding claims, wherein the field regulator (66) has an analogue/digital converter which has a voltage-detection range for the evaluation of the phase signal with the minimum value and the maximum value.

7. Power supply unit according to one of the preceding claims, wherein the rectifier elements (58) are embodied as trench elements.

8. Power supply unit according to one of the preceding claims, wherein the rectifier elements (58) comprise at least one Schottky diode, TMBS diode, TJBS diode and/or a lambda diode.

## Revendications

1. Unité d'alimentation en énergie pour un réseau de bord d'un véhicule automobile, comprenant un générateur de courant alternatif (10) qui délivre un signal de phase doté d'une bobine excitatrice (29), un régulateur de champ (66) associé à la bobine excitatrice (29) et un redresseur (69) doté d'éléments redresseurs (58) servant à redresser la tension de générateur délivrée par le générateur de courant alternatif, **caractérisée en ce que** le régulateur de champ (66) possède une plage de détection de tension pour l'interprétation du signal de phase avec une valeur minimale et une valeur maximale, la valeur maximale étant adaptée à la tension nominale d'une unité d'alimentation en énergie (10, 61) du véhicule automobile de telle sorte que l'unité d'alimentation en énergie (10, 61) est conçue pour l'utilisation d'éléments redresseurs (58) dépendants de la température, afin que le signal de phase puisse également être détecté lorsqu'une composante de tension continue fortement décalée lui est superposée.

2. Unité d'alimentation en énergie selon la revendication 1, la valeur maximale étant adaptée à la tension nominale du générateur de courant alternatif (10) ou d'une batterie de démarrage (61) conçue pour le démarrage du véhicule automobile.

3. Unité d'alimentation en énergie selon la revendication 1 ou 2, la valeur maximale correspondant pour l'essentiel à la tension nominale de l'unité d'alimentation en énergie (10, 61) du véhicule automobile.

4. Unité d'alimentation en énergie selon la revendication 1 ou 2, la valeur maximale correspondant au moins à une valeur qui se trouve dans une plage de 85 % à 100 % de la tension nominale.

5. Unité d'alimentation en énergie selon l'une des revendications précédentes, la valeur minimale correspondant au plus à une valeur qui se trouve dans une plage de 0 % à 15 % de la tension nominale.

6. Unité d'alimentation en énergie selon l'une des revendications précédentes, le régulateur de champ (66) possédant un convertisseur analogique/numérique qui présente une plage de détection de tension pour l'interprétation du signal de phase avec la valeur minimale et la valeur maximale.

7. Unité d'alimentation en énergie selon l'une des revendications précédentes, les éléments redresseurs (58) étant réalisés sous la forme d'éléments à tranchée.

8. Unité d'alimentation en énergie selon l'une des revendications précédentes, les éléments redresseurs (58) comprenant au moins une diode Schottky, une diode TMBS, une diode TJBS et/ou une diode lambda.
